# EUROPÄISCHE PATENTANMELDUNG

(11) **EP 4 035 529 A1**
(43) Veröffentlichungstag der Anmeldung: **03.08.2022**
(21) Anmeldenummer: 22153705.3
(22) Anmeldetag: 27.01.2022
(51) Int. Cl.: A01M 21/04, E01H 11/00, A01M 15/00

(54) **BRENNERANORDNUNG ZUR PFLEGE VON LANDSCHAFTSFLÄCHEN**

(30) Priorität: 29.01.2021 DE 102021102164
(71) Anmelder: Trautner, Jürgen, 72631 Aichtal (DE)
(72) Erfinder: Rall, Sebastian, 92224 Amberg (DE)
(74) Vertreter: Hafner & Kohl PartmbB

(57) **Zusammenfassung**

Brenneranordnung (1) zur Pflege von Landschaftsflächen (2), umfassend
- einen mit einer Brennereinheit (3) versehenen Wagen (4), wobei der Wagen (4) über wenigstens eine Rolle und/oder ein Rad (5) und/oder eine Kette auf der Landschaftsfläche (2) rollbar und/oder verfahrbar ist, wobei die Brennereinheit (3) zur Erzeugung von thermischer Energie (6) ausgehend von der Brennereinheit (3) zugeführtem Brennstoff eingerichtet ist,
- eine örtlich von dem Wagen (4) getrennt angeordnete Brennstoffquelle (7), wobei
- die Brennereinheit (3) während deren bestimmungsgemäßen Gebrauchs über eine Versorgungsleitung (8) mit der Brennstoffquelle (7) zur Versorgung der Brennereinheit (3) mit Brennstoff verbunden ist.

## Beschreibung

Die Erfindung betrifft eine Brenneranordnung zur Pflege von Landschaftsflächen. Aus dem Stand der Technik sind Brenneranordnungen bekannt, welche verwendet werden, um Landschaftsfläche mit thermischer Energie zu beaufschlagen. Hierzu wird an einem Wagen ein Speicher für Brennstoff mitgeführt, welcher einem ebenfalls an dem Wagen befestigten Brenner zugeführt wird.

Hierbei ist es nachteilig, dass der an dem Wagen mitgeführte Speicher für den Brennstoff das Gewicht des Wagens maßgeblich beeinflusst und aufgrund des Gewichts des Brennstoffspeichers die Handhabbarkeit, insbesondere das Manövrierverhalten des Wagens negativ beeinflusst wird. Auch ist die für die Brenneranordnung über den Speicher bereitstellbare Brennstoffmenge aufgrund der direkten Gewichtsauswirkungen auf den Wagen bei entsprechender Vergrößerung bzw. Anpassung des Speichers limitiert.

Der Erfindung liegt die Aufgabe zugrunde, eine Brenneranordnung zur Pflege von Landschaftsflächen anzugeben, welche insbesondere einfach zu bedienen und/oder zu manövrieren ist und zugleich ein effektives sowie effizientes Arbeiten ermöglicht.

Die Aufgabe wird durch eine Brenneranordnung zur Pflege von Landschaftsflächen gemäß Anspruch 1 gelöst. Die hierzu abhängigen Ansprüche betreffen mögliche Ausführungsformen der Brenneranordnung sowie eine Brennervorrichtung und ein Verfahren betreffend die hierin beschriebene Brenneranordnung.

Die Erfindung betrifft eine Brenneranordnung zur Pflege von Landschaftsflächen, umfassend (a) einen mit einer Brennereinheit versehenen Wagen, wobei der Wagen über wenigstens eine Rollen und/oder ein Rad und/oder eine Kette auf der Landschaftsfläche rollbar und/oder verfahrbar ist, wobei die Brennereinheit zur Erzeugung von thermischer Energie ausgehend von der Brennereinheit zugeführtem Brennstoff eingerichtet ist. Ferner umfasst die Brenneranordnung (b) eine örtlich von dem Wagen getrennt bzw. beabstandet angeordnete Brennstoffquelle. Die (c) Brennereinheit ist während deren bestimmungsgemäßen Gebrauchs über eine Versorgungsleitung mit der Brennstoffquelle zur Versorgung der Brennereinheit mit Brennstoff verbunden bzw. verbindbar. Dadurch, dass die Brennstoffquelle bzw. ein Brennstofftank zur Bevorratung und Bereitstellung des Brennstoffs räumlich getrennt bzw. beabstandet zum Arbeitsort der Brennereinheit und damit beabstandet zu dem Ort der thermischen Beaufschlagung durch die Brennereinheit vorliegt, kann die Funktion der Brennstoffbevorratung von der Brennervorrichtung bzw. von dem mit der Brennereinheit versehenem Wagen getrennt werden. Beispielsweise ist neben dem Arbeitsort ein, insbesondere ein fahrbare und/oder rollbare oder stationär abgestellte Brennstoffquelle angeordnet und über eine Verbindungsleitung mit der Brennervorrichtung verbunden. Dadurch, dass die Brennstoffquelle von dem die Brennereinheit tragenden Wagen getrennt angeordnet ist, weist der die Brennereinheit tragende Wagen ein geringeres Gesamtgewicht auf und ist leichter zu handhaben, insbesondere leichter zu manövrieren. Insbesondere dann, wenn die Brenneranordnung in einem unwegsamen Gelände und/oder in Hanglangen eingesetzt wird, ist es vorteilhaft, wenn die Brennervorrichtung bzw. der mit der Brennereinheit versehene Wagen getrennt von der Brennstoffquelle bewegt werden kann. Damit können Wendekreise verkleinert werden sowie Kippmomente in Hanglagen aufgrund eines tieferen Schwerpunkts der Brennervorrichtung reduziert werden.

Beispielsweise wird die Brennstoffquelle an einem ersten Ort abgestellt, z. B. auf einem Weg, und der die Brennereinheit aufweisende Wagen an einem zweiten, insbesondere an einem im Vergleich zu dem ersten Ort unwegsameren, Ort verbracht, wobei über die Versorgungsleitung eine Brennstoffbereitstellung ausgehend von der Brennstoffquelle erfolgen kann. Dadurch, dass der Wagen unmittelbar an den Arbeitsort bzw. an die Stelle der Landschaftsfläche zu verbringen ist, an welcher die thermische Energie einwirken soll, ist eine hohe Flexibilität bzw. ein hohes Maß an Manövrierfähigkeit des die Brennereinheit umfassenden Wagens vorteilhaft, um ein möglichst weitreichendes Einsatzgebiet der Brenneranordnung zu erreichen.

Der Wagen ist über wenigstens eine Rolle und/oder ein Rad und/oder eine Kette, insbesondere über Rollen und/oder Räder und/oder Ketten, auf der Landschaftsfläche rollbar und/oder verfahrbar. Die wenigstens eine Rolle und/oder Ras und/oder Kette kann zumindest abschnittsweise, insbesondere vollständig, aus Kunststoff und/oder Gummi ausgebildet sein. Auch kann beispielsweise ein Rad mit einer Luftbereifung oder Vollgummibereifung eingesetzt werden. Sofern der Wagen über einen Kettenantrieb auf der Landschaftsfläche verfahrbar bzw. verschiebbar ist, so können hierzu beispielsweise zumindest abschnittsweise, insbesondere vollständig, aus Metall oder Kunststoff und/oder Gummi bestehende Gleisketten bzw. Raupenketten eingesetzt werden.

Die Brenneranordnung wird zur Pflege von Landschaftsfläche eingesetzt, hierbei überfährt der mit der Brennereinheit versehene Wagen einen Abschnitt der zu pflegenden Landschaftsfläche und wirkt durch die von der Brenneinheit, insbesondere durch die von dem Brennermittel der Brennereinheit, ausgegebene thermische Energie, insbesondere unmittelbar, auf diesen Abschnitt der Landschaftsfläche ein. Hierbei erfolgt ein Abbrennen von vegetativen Bestandteilen der Landschaftsfläche bzw. deren so starke Erhitzung, dass ein weiteres Wachstum gerade solcher Teile nachteilig beeinflusst werden kann. Hierbei kann es sich um einen naturschutzfachlich wesentlichen Ansatz handeln, um die temporäre oder dauerhafte Art oder insbesondere Dichte und Höhe des Bewuchses der Landschaftsfläche alleine durch diese Maßnahme oder in Verbindung mit weiteren Maßnahmen zu beeinflussen, insbesondere sie in eine bestimmte Zielrichtung zu lenken. Dies kann etwa der Herstellung temporär oder beispielsweise bei wiederholter Anwendung dauerhaft vegetationsarmer oder -freier Bestandteile der Landschaftsfläche dienen. So wird es beispielsweise ermöglicht, mit der hierin beschriebenen Brenneranordnung auf einfache und effektive sowie effiziente Weise eine Wildkrautbekämpfung auszuführen bzw. ein wirksames Zurückdrängen von Vegetation auf einer zu pflegenden Landschaftsfläche oder bestimmten Teilen derselben zu erreichen.

Im bestimmungsgemäßen Gebrauch der Brenneranordnung wird der in der Brennstoffquelle bzw. in dem Brennstoffspeicher vorgehaltene Brennstoff über eine mit der Brennereinheit verbundene Versorgungsleitung der Brennereinheit zugeführt. Mit anderen Worten wird zumindest temporär, insbesondere zeitlich überwiegend, besonders bevorzugt ausschließlich, während des Einsatzes der Brennereinheit bzw. während des befeuerten Betriebs der Brennereinheit eine Verbindung der Brennereinheit über die Versorgungsleitung mit wenigstens einer Brennstoffquelle bzw. mit wenigstens einem Brennstoffspeicher aufrechterhalten. Die wagenseitige Brennereinheit kann ein Anschlussmittel bzw. eine Schnittelle zum Anschließen der Versorgungsleitung aufweisen, wobei das Anschlussmittel über eine wagenseitige Förderleitung mit der Brennereinheit verbunden ist, um den an dem Anschlussmittel zugeführten Brennstoff zum Brennermittel zu transportieren. Für einen möglichst ununterbrochenen Betrieb der Brenneranordnung kann es vorgesehen sein, dass die Brennereinheit mit wenigstens zwei Brennstoffquellen geleichzeitig verbunden ist und über einen Wahlschalter die Beschickung der Brennereinheit wahlweise aus einer ersten Brennstoffquelle oder aus einer zweiten Brennstoffquelle erfolgen kann.

Als Brennstoff kann bevorzugt ein gasförmiger Brennstoff verwendet werden. Beispielsweise wird als Brennstoff Erdgas oder Biogas verwendet. Der Brennstoff kann in oder an der Brennereinheit, insbesondere in oder an dem Brennermittel, mit Frischluft bzw. Umgebungsluft zur Bildung eines Brennstoff-Luft-Gemischs vermischt werden. Dieses Brennstoff-Luft-Gemisch wird in oder an dem Brennermittel verbrannt, wobei die thermische Energie dieses Verbrennungsprozesses zur Pflege der Landschaftsfläche eingesetzt wird.

Es ist möglich, dass die Versorgungsleitung zur zumindest brennstoffübertragenden Verbindung von Brennereinheit und Brennstoffquelle (a) flexibel und/oder biegeschlaff ausgebildet ist und/oder (b) über eine flexible Schnittstelle mit der Brennereinheit und/oder mit der Brennstoffquelle verbunden ist. Beispielsweise ist die Versorgungsleitung als flexibler Leitungsschlauch ausgebildet, sodass etwaige Relativbewegungen des mit der Brennereinheit versehenen Wagens zu der Brennstoffquelle von der flexiblen Versorgungsleitung bzw. dem Leitungsschlauch toleriert bzw. mitgemacht werden. Die Versorgungsleitung kann beispielsweise ein Biegeverhalten aufweisen, das im Zustand keiner äußeren Krafteinwirkung zu einer Verformung aufgrund von Schwerkraft bzw. aufgrund des Eigengewichts der Versorgungsleitung führt. Mit anderen Worten kann die Versorgungsleitung als forminstabile Baugruppe und/oder als forminstabiles Bauteil ausgebildet sein. Unter einer flexiblen Versorgungsleitung ist auch deren flexibles bzw. bewegbares Befestigen bzw. Verbinden an der Brennereinheit und/oder an der Brennstoffquelle zu verstehen. So kann beispielsweise eine brennereinheitsseitige Anschlussstelle der Versorgungsleitung derart ausgebildet sein, dass diese eine Relativbewegung zwischen der Versorgungsleitung und der Brennereinheit und/oder Brennstoffquelle unter Aufrechterhaltung einer brennstoffübertragenden Funktion ermöglicht.

In einer vorteilhaften Ausführungsform kann die Brennereinheit zumindest überwiegend, bevorzugt vollständig, steif mit dem Wagen verbunden sein. Hierbei können die das wesentliche Gewicht der Brennereinheit ausmachenden Elemente steif mit dem Wagen verbunden sein, sodass diese eine steife Einheit mit dem Wagen bilden und damit ein Manövrieren des Wagens definierter ausführbar ist.

In einer vorteilhaften Ausführungsform kann es beispielsweise vorgesehen sein, dass der Wagen als Handwagen bzw. als Handkarren ausgebildet ist und manuell über die Landschaftsfläche bewegbar ist, insbesondere weist der Wagen eine Handhabe zur Einbringung einer von einer Bedienperson ausgehenden Kraft zum Antreiben und/oder Lenken des Wagens. Diese manuelle Bewegung des Wagens kann die Einwirkung einer von einer Bedienperson durch Muskelkraft ausgeführte Zug- und/oder Druckkraft umfassen, welche als lenkende Lenkkraft und/oder als den Vortrieb des Wagens bewirkende Antriebskraft wirkt. Hierbei kann der Wagen zumindest temporär durch eine Bedienperson geschoben und/oder gezogen werden. Um die Krafteinbringung zur Bewegung des Wagens und/oder zum Lenken des Wagens vorzunehmen, kann der Wagen mit einer Handhabe bzw. mit wenigstens einem Handgriff versehen sein. Die Handhabe kann einen Griffbereich umfassen.

Bevorzugt ist die Handhabe bzw. der Griffbereich in seiner Position und/oder Ausrichtung relativ zu dem wenigstens einen Rad, Rolle und/oder Kette des Wagens veränderbar, sodass beispielsweise eine auf die Bedienperson angepasste Position und/oder Ausrichtung der Handhabe eingestellt werden kann bzw. einstellbar ist. Hierzu kann beispielsweise ein Klemm- und/oder Steckmechanismus verwendet werden. Beispielsweise sind mehrere Befestigungsausnehmungen zur wahlweisen Aufnahme eines Fixiermittels zur Befestigung eines die Handhabe tragenden Elements zur Erlangung einer gewünschten Position und/oder Ausrichtung der Handhabe relativ zu dem wenigstens einen Rad und/oder Rolle und/oder Kette des Wagens.

Alternativ oder zusätzlich kann der Wagen zumindest temporär, bevorzugt überwiegend, besonders bevorzugt ausschließlich, im bestimmungsgemäßen Gebrauch durch eine Hebe- und/oder Senk- und/oder Zugvorrichtung, wie beispielsweise einer Winde, insbesondere einer Seilwinde, bewegt werden. Damit kann die Hebe- und/oder Senkvorrichtung nach Art einer Zugvorrichtung ausgebildet sein, welche ein Zugmittel zum Ziehen und/oder Ablassen des Wagens nutzt. Der Wagen kann beispielsweise selbst eine Hebe- und/oder Senkvorrichtung und/oder eine Schnittstelle zur Verbindung mit einer vom Wagen getrennt angeordneten Hebe- und/oder Senkvorrichtung (z. B. Winde) aufweisen. Beispielsweise ist die wagenseitige Schnittstelle als Öse ausgebildet, in welche ein windenseitiger Haken einer von dem Wagen räumlich getrennt bzw. beabstandet angeordnete Winde angehängt werden kann, um den Wagen durch entsprechende Steuerung der Hebe- und/oder Senkvorrichtung zu bewegen. Insbesondere kann vermittels der Hebe- und/oder Senk- und/oder Zugvorrichtung der Wagen in einer einen Hang ausbildenden Landschaftsfläche den Hang hinabgelassen und/oder herangezogen bzw. hinaufgezogen.

Es ist möglich, dass der Wagen einachsig ausgebildet ist, bevorzugt sind zwei Räder an zwei koaxial ausgerichteten und eine Wagenachse bildenden Achsstummeln bzw. Achsstumpf drehbar gelagert. Dieser zwei koaxial zueinander ausgerichtete Achsstummel aufweisende Wagen wird in diesem Zusammenhang als einachsige Bauform des Wagens verstanden. Alternativ kann der Wagen zwei mit einer Starrachse verbundene Räder umfassen, sodass wiederum ein einachsiger Wagen gebildet werden kann. Ein in diesem Zusammenhang als einachsiger Wagen bezeichneter Wagen kann sich durch ausschließlich eine einzige Achse auszeichnen. Alternativ kann ein Wagen eingesetzt werden, der mehr als eine Achse für seine Antriebsmittel bzw. seine Antriebsräder aufweist. Der einachsig ausgebildete Wagen kann beispielsweise nach Art einer Sackkarre ausgebildet sein, wobei die einzige Achse der Räder gleichzeitig einen Drehpunkt zum Kippen des Wagens bildet. Mit anderen Worten kann eine Radnabe der Räder des Wagens einen Hebeldrehpunkt ausbilden, sodass bei Hinunterdrücken der Handhabe des Wagens dieser eine sich über die Radachse drehende Drehbewegung ausführt und damit das Brennmittel, welches auf der der Handhabe gegenüberliegenden Seite des Wagens relativ zu der Radachse angeordnet ist, angehoben werden kann. Die einachsige Bauform ermöglicht insbesondere für die Ausgestaltung des Wagens als manuell durch Muskelkraft einer Bedienperson zu bewegender, insbesondere anzutreibender und/oder zu lenkender, Handwagen eine technisch einfache und zugleich gut manövrierbare Bauform des Wagens.

Alternativ oder zusätzlich kann der Wagen mit einem Antrieb zum Vortrieb des Wagens ausgebildet sein, bevorzugt erfolgt eine Steuerung des Antriebs und/oder einer Lenkung des Wagens vermittels einer kabellosen oder kabelgebundenen Steuersignalübertragung zwischen (a) dem Antrieb und/oder der Lenkung und (b) einem von dem Wagen räumlich getrennt angeordneten Steuereinheit einer Steuereinrichtung. Mit dieser Steuereinheit kann eine Fernsteuerung des wagenseitigen Antriebs und/oder der wagenseitigen Lenkung über die Steuereinrichtung erfolgen. Beispielsweise weist die Steuereinheit eine Eingabeeinheit auf, durch welche eine, insbesondere von dem Wagen beabstandete, Bedienperson auf den wagenseitigen Antrieb und/oder auf die wagenseitige Lenkung gezielten Einfluss nehmen kann. Über die Steuereinheit kann bzw. können beispielsweise Bewegungs-, Ort- und/oder Zielinformation(en) durch eine Person in Form von akustischer und/oder taktiler und/oder optischer Signale, z. B. (a) berührend manuell via beispielsweise ein Touchpad und/oder (b) via Sprachsteuerung, eingegeben werden, welche dem wagenseitigen Antrieb und/oder der wagenseitigen Lenkung entsprechende Steuerungssignale übermittelt. Mit anderen Worten ist es möglich sein, dass die Steuereinrichtung eingerichtet ist, zumindest teilweise, insbesondere vollständig, ein automatisiertes Fahren des, insbesondere fahrerlosen, Wagens auszuführen. Dabei kann der als fahrerlose Wagen ausgebildete Wagen beispielsweise zumindest ähnlich wie ein fahrerloses Transportfahrzeug ausgestattet sein. Es können beispielsweise Navigationsdaten, wie z. B. navigationssatellitengestützte Daten, wie beispielsweise GPS-Daten, eingesetzt werden. Zusätzlich oder alternativ kann der Wagen mit wenigstens einem Sensor ausgestattet sein, welcher Umgebungsdaten erfasst und diese in einem zumindest teilautonomen oder vollständig autonomen Fahrmodus berücksichtigt.

Die Steuereinheit kann über eine Steuersignalverbindung ein Steuersignal zwischen der, insbesondere von dem Wagen beabstandeten, Steuereinheit und einem Antrieb und/oder einer Lenkung übermitteln. Hierzu kann die Steuereinrichtung ein wagenseitiges Steuerelement umfassen, das kabelgebunden oder kabellos eine Signalübertragung zu der vom Wagen beabstandeten Steuereinheit ausführen kann.

Der Wagen kann als fahrerloser Wagen ausgebildet bzw. konzipiert sein. Folglich kann der Wagen sich zumindest abschnittsweise, insbesondere vollständig, ohne eine berührende Einflussnahme bzw. ohne aufgrund einer Krafteinbringung einer Bedienperson sich autonom auf der Landschaftsfläche bewegen. Die Steuerung des Wagens kann hierbei beispielsweise vermittels einer als Fernsteuerung ausgebildeten Steuereinheit erfolgen.

Alternativ oder zusätzlich kann es vorgesehen sein, dass eine Person zumindest temporär durch den Wagen getragen wird. Hierzu kann der Wagen beispielsweise eine Trittfläche aufweisen, auf welche sich eine Person stellen und/oder setzen kann, um einen Flächenabschnitt zu überbrücken.

Der Brennstoff zum Betreiben des Brennermittels bzw. zur Erzeugung der für die Pflege der Landschaftsfläche eingesetzten thermischen Energie kann zumindest abschnittsweise, insbesondere vollständig, in gasförmiger Form über die Versorgungsleitung von der Brennstoffquelle zu der Brennereinheit transportiert werden. Dies birgt den Vorteil, dass ein sicherer Aufbau erreichbar ist, da der Brennstoff bereits in gasförmiger Form vorliegt, kann die Gefahr einer Explosion reduziert werden. Im Falle eines flüssigen Brennstoffs könnte sich bei einem Leitungsdefekt bzw. im Fall einer Leckage eine Explosion aufgrund einer raschen Expansion des flüssigen Brennstoffs ereignen, wie dies beispielsweise bei Brennstoffen wie z. B. Flüssiggas, im Zuge deren schnellen Verdampfens bestehen kann. Allgemein besteht die Gefahr bei einem Transport von Brennstoff in einer Flüssiggasphase, dass dieser im Fall einer Leckage der Versorgungsleitung (Schlauchleck) sein Volumen in kürzester Zeit verzweihundertfacht und es folglich zu einer Explosion kommen kann. Durch eine Beschickung der Brennereinheit mit einem gasförmigen Brennstoff und/oder durch eine Durchleitung von einem gasförmigen Brennstoff durch die Versorgungsleitung kann eine derartige Gefahrenquelle ausgeschlossen werden. Zwar benötigt der gasförmige Brennstoff ein höheres Volumen für die Durchleitung einer äquivalenten Energiemenge als ein flüssiger Brennstoff, jedoch ermöglicht die räumliche Trennung der Brennstoffquelle von dem Wagen dies durch die unproblematische Verwendung eines entsprechend größeren Brennstoffspeichers zu kompensieren.

In einer alternativen Ausführungsform kann es sich als zweckmäßig erweisen, wenn ein Brennstoff verwendet wird, welcher bis zur Brennereinheit in flüssiger Form vorliegt und an der Brennereinheit eine Aggregatsänderung in den gasförmigen Zustand erfährt. So kann Aggregatszustandsänderung von flüssig nach einem auf gasförmig eine wagenseitigen Anschlussmittel der Zuführleitung des Brennstoffs erfolgen. Durch das Verdampfen des Brennstoffs am Wagen, insbesondere innerhalb der Brennereinheit, ergibt sich eine Kühlung der Umgebung des Ortes an welchem die Aggregatsänderung erfolgt. Damit kann beispielsweise ein Kühleffekt an der Brennereinheit ausgeführt werden, welcher einen eine höhere Austrittstemperatur zur Beaufschlagung der Landschaftsfläche bereitstellenden Betrieb der Brennereinheit ermöglicht. Alternativ oder zusätzlich kann ein zeitlich längerer und/oder ein ohne oder mit weniger (Abkühl-) Unterbrechungen aufweisender Betrieb der Brennereinheit ermöglicht werden.

Da für die Beaufschlagung der Landschaftsfläche mit thermischer Energie eine relativ hohe Energiemengen benötigt werden, ist die Verwendung und Zuführung von einem gasförmigen Brennstoff durch einen extern zum Wagen angeordneten oder ausgebildeten Brennstofftank bzw. Brennstoffquelle an das Brennermittel von Vorteil. Ein weiterer Vorteil der Verwendung von einem gasförmigen Brennstoff ist darin zu sehen, dass es im Falle einer Zuführung von flüssigen durch die Versorgungsleitung und zu dem Brennermittel es im Zuge des Durchlaufens eines Verdampfers zu einer Abkühlung im Bereich des Verdampfers kommen kann. Dieses Herabkühlen kann im Falle großer Energiemengen zu einer Vereisung führen und damit den Betrieb der Brenneranordnung beeinträchtigen. In der vorliegenden bevorzugt Ausführung, welche ein bereits in gasförmiger Form vorliegenden Brennstoff der Brennervorrichtung und insbesondere dem Brennermittel zuführt, kann diese Gefahr des Herabkühlens bzw. des Vereisens verhindert werden.

Zwischen der (a) Brennereinheit und der Brennstoffquelle bzw. zwischen der Brennereinheit und dem Brennstoffspeicher und/oder (b) in oder an der Brennstoffquelle kann beispielsweise ein Druckminderungsmittel angeordnet oder ausgebildet sein, das den Druck bzw. den Druckwert des Brennstoffs stromab der Brennstoffquelle reduziert. Beispielsweise wird als Brennstoffquelle bzw. als Brennstoffspeicher ein Gastank verwendet, der in seinem Inneren einen Brennstoff mit einem Druck von maximal 20 bar, bevorzugt von maximal 14 bar, besonders bevorzugt von maximal 12 bar, höchst bevorzugt von maximal 10 bar, aufweist. Durch das, insbesondere nahe oder unmittelbar am Ausgang des Tanks angeordneten, Druckminderungsmittel kann beispielsweise der Druck des Brennstoffs stromab des Druckminderungsmittels auf maximal 8 bar, bevorzugt auf maximal 6 bar, besonders bevorzugt auf maximal 4,5 bar, höchst bevorzugt auf maximal 4,0 bar, reduziert werden. Damit kann beispielsweise im stromab des Druckminderungsmittels verlaufenden Leitungssystems ein maximaler Druck des Brennstoffs von maximal 8 bar, bevorzugt von maximal 6 bar, besonders bevorzugt von maximal 4,5 bar, höchst bevorzugt von maximal 4,0 bar, vorherrschen. Mit anderen Worten kann das Druckminderungsmittel als Mitteldruckregler ausgebildet sein, sodass stromab des Druckminderungsmittels ein Mitteldruck in den Leitungen vorherrscht. In einer zweckmäßigen Ausführungsform beträgt der Druck in der Versorgungsleitung und/oder in der Brennereinheit im bestimmungsgemäßen Gebrauch der Brenneranordnung bzw. der Brennervorrichtung mindestens 50 mbar, bevorzugt mindestens 200 mbar, besonders bevorzugt mindestens 450 mbar, höchst bevorzugt mindestens im 750 mbar. Mit anderen Worten kann im bestimmungsgemäßen Gebrauch der Druck in der Versorgungsleitung und/oder in der Brennereinheit im Mitteldruckbereich, d. h. im Wesentlichen zwischen 0,5 bis 6 bar, bevorzugt zwischen 1 bis 4 bar, liegen, dies ermöglicht einerseits einen hohen Grad der transportierten Energiemenge und zugleich eine sichere Ausgestaltung des Betriebs der Brenneranordnung.

Es ist auch möglich, die Brennstoffanordnung derart zu betreiben, dass der Brennstoff in der Versorgungsleitung und/oder in der Brennereinheit im Niederdruckbereich liegt. Hierzu kann vermittels eines entsprechend ausgestatteten Druckminderungsmittels der Druck in der Versorgungsleitung und/oder in der Brennereinheit auf maximal 100 mbar, bevorzugt auf maximal 65 mbar, besonders bevorzugt auf maximal 55 mbar, höchst bevorzugt auf maximal 35 mbar, reduziert werden. Das Druckminderungsmittel kann beispielsweise unmittelbar an einem als Brennstoffquelle ausgebildeten Brennstofftank angeordnet oder ausgebildet sein.

Die Brenneranordnung kann beispielsweise derart eingerichtet sein, dass die von ihr auf die Landschaftsfläche einwirkende thermische Energie zumindest teilweise, bevorzugt überwiegend, besonders bevorzugt gänzlich, auf die auf der Landschaftsfläche vorherrschende Vegetation bzw. auf die auf der Landschaftsfläche oder Teilen derselben befindlichen Pflanzen einwirkt und dabei keine Zerstörung von unterhalb einer Bodenoberfläche liegenden Teilen der Vegetation oder keine Abtötung bestimmter sonstiger sich zum Einsatzzeitpunkt im Boden befindlicher Tierindividuen hervorruft bzw. ausführt. Hierbei kann ein kurzzeitiger jedoch hochenergetischer Energieeintrag vermittels der thermischen Energiebeaufschlagung der Landschaftsfläche erfolgen, der zu einer Zerstörung (z. B. Verbrennung) oder Schädigung von überirdischen Pflanzenteilen führt, jedoch das Wurzelwerk und ggf. unterhalb dieser Pflanze liegende Pflanzenteile und damit bodennahe Pflanzenstrukturen sowie bestimmte ggf. dort zum Einsatzzeitpunkt befindliche Tierindividuen weniger intensiv schädigt oder gänzlich verschont. Mit anderen Worten kann mit der hierin beschriebenen Brenneranordnung beispielsweise ermöglicht werden hochwachsende Pflanzenteile zurückzudrängen und gleichzeitig tieferliegende bzw. bodennahe oder unterirdische Pflanzenteile und ggf. zum Einsatzzeitpunkt dort befindliche Tierindividuen zu verschonen oder zumindest in einem signifikant geringeren Maße zu schädigen.

Über ein, insbesondere manuell bedienbares, Einstellmittel kann beispielsweise die Menge des einem Brennermittel der Brennereinheit zugeführten Brennstoffs eingestellt werden. Bevorzugt ist das Einstellmittel im Nahbereich bzw. im Greifbereich einer Handhabe eines, insbesondere manuell über die Handhabe zu bewegenden, bevorzugt zu steuernden und/oder anzutreibenden, Wagens angeordnet. Als Einstellmittel kann beispielsweise ein automatisiert oder manuell ansteuerbares bzw. ein händisch zu betätigendes Ventil verwendet werden, das die Menge bzw. den Volumen- und/oder Massenstrom eines in einer Leitung bzw. das Ventil durchströmenden Brennstoffs verändern kann. Hierbei kann die über das Ventil einstellbare Menge an Brennstoff vorzugweise gestuft oder stufenlos zwischen 0 und 100 % betragen.

In einer zweckmäßigen optionalen Weiterbildung kann es vorgesehen sein, dass die Leitung zur Förderung des Brennstoffs, insbesondere eine wagenseitige Förderleitung zur Förderung des Brennstoffs, einen Abzweig aufweist, an welchem sich die Leitung auf wenigstens zwei Teilströme aufteilt. Diese beiden Teilströme führen jeweils getrennt voneinander zu dem Brennermittel oder werden stromauf des Brennermittels und stromab des Abzweigs wieder zu einem gemeinsamen Leitungsabschnitt zusammengeführt und von dort gemeinsam dem wenigstens einen Brenner zugeführt.

Der Wagen kann eine Schnittstelle zum Anschluss der Versorgungsleitung umfassen. Von diesem Anschluss führt stromab eine wagenseitige Förderleitung den Brennstoff zu dem Brennermittel. Die wagenseitige Förderleitung kann zumindest überwiegend als steife Verrohrung steif an einer Grundstruktur des Wagens befestigt sein. Dabei kann das wenigstens eine Einstellmittel zur Veränderung der durch die Leitung durchgeleiteten Menge an Brennstoff beispielsweise zwischen Teilabschnitten der wagenseitigen Förderleitung angeordnet sein.

Eine im Nahbereich einer Handhabe des Wagens angeordnetes Einstellmittel bedeutet, dass im bestimmungsgemäßen Gebrauch der Handhabe zum Antreiben und/oder zum Steuern des Wagens durch eine Bedienperson, diese Bedienperson das Steuerungsmittel bedienen kann, insbesondere derart, dass während die Bedienperson den Wagen über die Handhabe antreibt und/oder lenkt, eine erste Hand an der Handhabe zum Bewegen und/oder Steuern des Wagens verbleiben kann, während die zweite Hand das Einstellmittel bedient. Es ist möglich, dass das Einstellmittel maximal 100 cm, bevorzugt maximal 75 cm, besonders bevorzugt maximal 50 cm, höchst bevorzugt maximal 30 cm, von der Handhabe des Wagens beabstandet ist. Auch kann das Einstellmittel beispielsweise derart von der Handhabe des Wagens beabstandet sein, dass dieses ausgehend von der an der Handhabe angreifenden Hand ohne ein Umgreifen bedienbar ist, z. B. vermittels eines über einen Finger betätigbares Einstellelement, z. B. ähnlichen eines Daumenschalters einer Fahrradgangschaltung.

Es ist möglich, dass die wagenseitig angeordnete Brennereinheit ein Anschlussmittel zum Anschluss der Versorgungsleitung umfasst, wobei die Versorgungsleitung über eine wagenseitige Förderleitung mit einem Brennermittel der Brennereinheit verbunden ist, wobei zwischen dem Anschlussmittel und dem Brennermittel wenigstens zwei in Reihe angeschlossene Einstellmittel angeordnet sind, wobei eine Bypassleitung den Brennstoff an wenigstens einem ersten Einstellmittel vorbeiführt, bevorzugt ist die Bypassleitung derart eingerichtet, dass ein definierter Volumenstrom und/oder Massenstrom an Brennstoff an dem ersten Steuerungsmittel vorbeigeführt wird, um eine Standflamme bzw. Standby-Flamme am Brennermittel zu erzeugen und/oder aufrechtzuerhalten. Damit kann beispielsweise erreicht werden, dass wenn ein erstes Einstellmittel geschlossen ist und ein zweites Einstellmittel geöffnet ist, eine vordefinierte Menge, d. h. ein vordefinierte Volumen- und/oder Massenstrom, des Brennstoffs an dem ersten, geschlossenen Einstellmittel vorbeigeführt und dem Brennermittel zugeführt wird. Aufgrund der durch den Bypass und unabhängig von der Einstellung des ersten Einstellmittels erfolgenden Mindestbereitstellung an Brennstoff an dem Brennermittel kann sich an dem Brennermittel eine Standby-Flamme bzw. eine Standflamme ausbilden. Die durch das Brennermittel aufgrund dieser Standbymenge an Brennstoff erzeugte thermische Energie ist deutlich geringer als die erzeugte thermische Energie im regulären Betrieb des Brennermittels bei teilgeöffnetem oder gänzlich geöffnetem erste Einstellmittel. Beispielsweise beträgt die Standbymenge im Vergleich zur der bei gänzlich geöffnetem ersten Einstellmittel dem Brennermittel zugeführte Brennstoffmenge maximal einem Zehntel, bevorzugt maximal einem Fünfzehntel, besonders bevorzugt maximal einem Dreißigstel. Mit dieser Standby-Flamme bzw. mit dieser Standflamme soll ein Neuentzünden einer Flamme in temporären Ruhephasen der Brennervorrichtung verhindert bzw. ein Standbybetrieb der Brennervorrichtung ermöglicht werden und damit die Handhabbarkeit der Brennervorrichtung insgesamt positiv beeinflusst werden.

Die Brennereinheit kann beispielsweise ein Zündmittel zum Entzünden eines aus der Brennereinheit austretenden Brennstoffs umfassen, bevorzugt ist das Zündmittel durch eine manuell zu bedienende Zündmittelbetätigung aktivierbar bzw. betätigbar, wobei die Zündmittelbetätigung im Nahbereich bzw. im Greifbereich der Handhabe des Wagens angeordnet sein kann. Beispielsweise weist das Zündmittel ein nach Art einer Zündkerze ausgebildetes und/oder ein ein Piezoelement umfassendes Zündelement auf, wobei das Zündelement vermittels einer manuell zu bedienenden Zündmittelbetätigung aktivierbar ist. Beispielsweise ist die Zündmittelbetätigung mit einem Druckknopf versehen, der ein Steuersignal und/oder ein Leistungssignal über eine Leitung an ein in oder am Brennermittel angeordnetes oder ausgebildetes Zündelement, z. B. eine Zündkerze, übermittelt und dort durch eine entsprechende Ansteuerung eines Energiespeichers zur Freigabe eines Zündfunkens oder vermittels des Leistungssignals selbst an dem Zündmittel einen Zündfunken erzeugt. Die Anordnung der Zündmittelbetätigung im Nahbereich kann beispielsweise analog zu der Anordnung des wenigstens eines im Nahbereich der Handhabe des Wagens angeordneten Einstellmittels ausgeführt werden, siehe oben. Beispielsweise ist die Zündmittelbetätigung durch die Bedienperson betätigbar, während wenigstens eine Hand der Bedienperson an zumindest einer Handhabe bzw. Griff des Wagens verbleibt. So kann z. B. die Zündmittelbetätigung maximal 100 cm, bevorzugt maximal 75 cm, besonders bevorzugt maximal 50 cm, höchst bevorzugt maximal 30 cm, von der Handhabe des

Wagens beabstandet angeordnet oder ausgebildet sein.

Es ist möglich, dass das wenigstens eine Einstellmittel, bevorzugt sämtliche Einstellmittel des Wagens, und die Zündmittelbetätigung in einer gemeinsamen Baugruppe bzw. als eine Baueinheit (z. B. gemeinsame Vormontageeinheit) an der Grundstruktur des Wagens, insbesondere an einem Rahmenelement des Wagens, befestigbar oder befestigt ist.

Es kann sich als zweckmäßig erweisen, wenn die Versorgungsleitung, insbesondere die flexible Versorgungsleitung, integral und/oder eine gemeinsame Baugruppe mit (a) einer Steuersignalübertragung zur Übertragung eines Steuersignals von einer vom Wagen beabstandeten bzw. räumlich getrennten Steuereinheit und einem wagenseitigen Steuerelement und/oder (b) mit einer elektrischen Verbindungsleitung zur Übertragung von elektrischer Energie zwischen einer vom Wagen beabstandeten bzw. räumlich getrennten elektrischen Energiequelle und einem wagenseitigen elektrischen Energiespeicher und/oder (c) mit einem mit dem Wagen verbindbaren Zugmittel eines vom Wagen beabstandeten bzw. räumlich getrennten Zug- und/oder Hebevorrichtung ausgebildet ist. Mit anderen Worten kann beispielsweise in oder an der, insbesondere flexiblen, Versorgungsleitung eine Steuersignalleitung zur Übertragung eines Steuersignals für eine Steuerung eines Antriebs und/oder einer Lenkung des Wagens und/oder eine Energieversorgungsleitung zur Versorgung des Wagens mit Energie für dessen Antrieb angeordnet oder ausgebildet sein.

Neben der Brenneranordnung betrifft die Erfindung auch eine Brennervorrichtung umfassend einen Wagen und eine auf dem Wagen befestigte Brennereinheit gemäß einer hierin beschriebenen Brenneranordnung. Dabei kann die Brennervorrichtung bzw. der mit der Brennereinheit versehene Wagen die oben genannten Merkmale aufweisen und vermittels eines Anschlusses über eine, insbesondere flexiblen, Versorgungsleitung mit einem von der Brennervorrichtung räumlich getrennten bzw. beabstandeten Brennstoffquelle zur Zuführung von Brennstoff an die Brennereinheit ausgestattet bzw. verbindbar sein. Ferner betrifft die Erfindung ein Verfahren zur Pflege einer Landschaftsfläche unter Verwendung einer hierin beschriebenen Brenneranordnung, insbesondere unter Verwendung einer hierin beschriebenen Brennervorrichtung, wobei die zu pflegende Landschaftsfläche mit dem die Brenneinheit aufweisenden Wagen überfahren bzw. überrollt wird und dabei die Landschaftsfläche mit thermischer Energie durch Verbrennung des Brennstoffs in der Brennereinheit, insbesondere in dem Brennermittel, beaufschlagt wird.

Sämtliche Vorteile, Einzelheiten, Ausführungen und/oder Merkmale der erfindungsgemäßen Brenneranordnung sind auf die Brennervorrichtung und/oder auf das Verfahren übertragbar bzw. anzuwenden.

Die Erfindung ist anhand von Ausführungsbeispielen in den Zeichnungen näher erläutert. Dabei zeigt:
- Fig. 1: eine schematische Darstellung einer Brenneranordnung gemäß einem Ausführungsbeispiel;

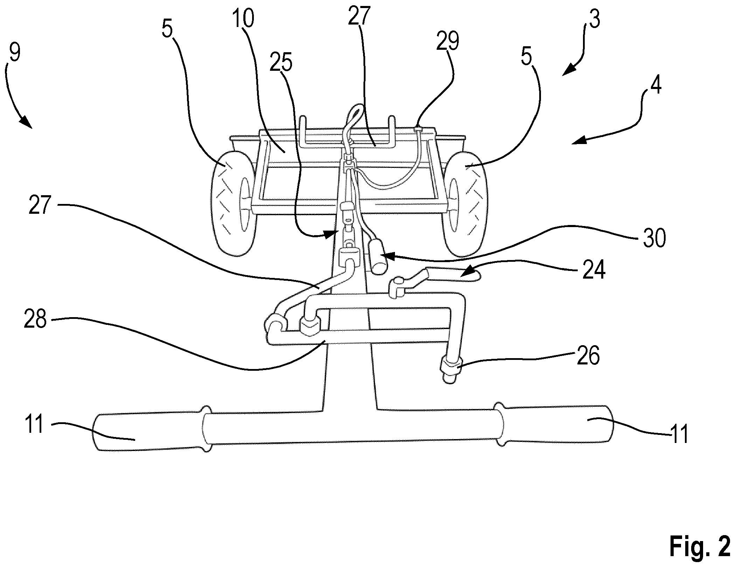

- Fig. 2: eine perspektivische Prinzipdarstellung einer Brennervorrichtung gemäß einem Ausführungsbeispiel;
- Fig. 3: eine perspektivische Prinzipdarstellung eines vorderen Endes einer Brennervorrichtung gemäß einem Ausführungsbeispiel;
- Fig. 4: eine schematische Darstellung einer Brenneranordnung gemäß einem Ausführungsbeispiel.

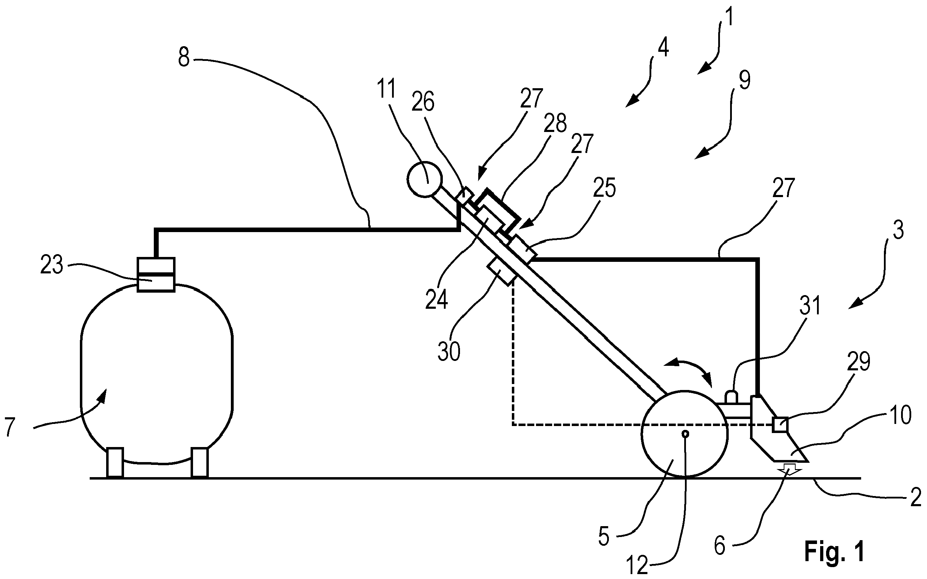

In Figur 1 ist Brenneranordnung 1 zur Pflege von Landschaftsflächen 2 dargestellt. Die Brenneranordnung 1 umfasst (a) einen mit einer Brennereinheit 3 versehenen Wagen 4, wobei der Wagen 4 über wenigstens eine Rolle und/oder ein Rad 5 und/oder eine Kette auf der Landschaftsfläche 2 rollbar und/oder verfahrbar ist, wobei die Brennereinheit 3 zur Erzeugung von thermischer Energie 6 ausgehend von der Brennereinheit 3 zugeführtem Brennstoff eingerichtet ist, (a) eine örtlich getrennt von dem Wagen 4 getrennt bzw. beabstandet angeordnete Brennstoffquelle 7, wobei (b) die Brennereinheit 3 während deren bestimmungsgemäßen Gebrauchs über eine Versorgungsleitung 8 mit der Brennstoffquelle 7 zur Versorgung der Brennereinheit 3 mit Brennstoff verbunden ist. Die Brennstoffquelle 7 bzw. der Tank, in welchem der Brennstoff bevorratet ist, ist von dem die Brennereinheit 3 umfassenden Wagen 4 beabstandet. Der Wagen 4 und die auf dem Wagen 4 befestigte Brennereinheit 3 bilden eine Brennervorrichtung 9 aus, welche über die Versorgungsleitung 8 mit der Brennstoffquelle 7 zur Versorgung der Brennereinheit 3 bzw. des Brennermittels 10 der Brennereinheit 3 mit Brennstoff aus der Brennstoffquelle 7 verbunden ist. Der Wagen 4 kann hierzu beispielsweise eine Tragstruktur umfassen, bevorzugt in einer Rahmenbauform vorliegen, besonders bevorzugt wird ein Rohrrahmen als Tragstruktur des Wagens verwendet.

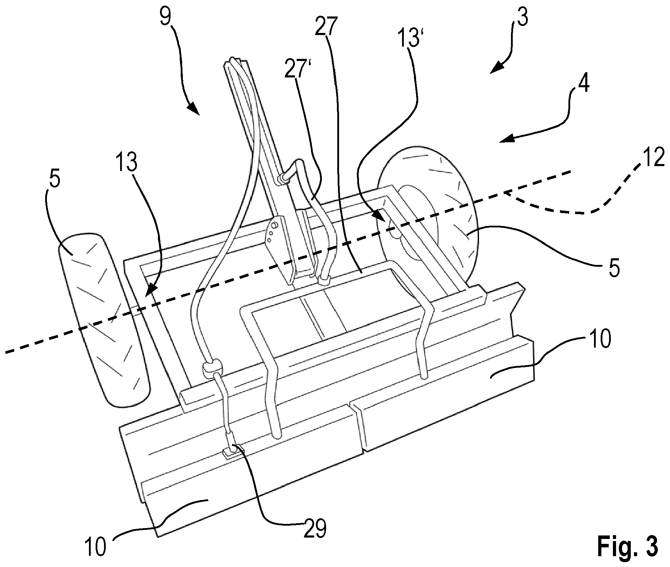

In Figur 3 ist erkennbar dass die Förderleitung 27 an der Stelle eines Knickbereichs mit einem flexiblen Bereich (Förderleitung 27') versehen ist, um eine Verstellung des die Handhabe tragenden Holms gegenüber dem Basiskörper des Wagens 4 ausführen zu können. Auch ist der Holm, welcher an seinem freien Ende die Handhabe 11 trägt, zu einem die Räder 5 lagernden Basiskörper des Wagens 4 schwenkbar bzw. in seinem Winkel veränderbar ist. Hierbei können stufenlos oder gestuft unterschiedliche Winkel zwischen dem Holm der Handhabe 11 und dem Basiskörper des Wagens veränderbar sein. Gemäß Figur 3 können hierzu mehrere Löcher vorgesehen sein, in welche gezielt ein Fixiermittel mit einem entsprechenden Winkelanpassung des Holms einstellbar ist.

Die Versorgungsleitung 8 kann beispielsweise zur brennstoffübertragenden Verbindung von Brennereinheit 3 und Brennstoffquelle 7 flexibel und/oder biegeschlaff angeordnet oder ausgebildet sein. Beispielsweise ist die Versorgungsleitung 8 als flexibler Gasleitungsschlauch ausgebildet, sodass eine Bewegung des Wagens 4 ausführbar ist, während die Brennstoffquelle 7 ortsfest verbleibt oder in einer von der Bewegung des Wagen 4 abweichenden Art und Weise bewegt wird. Diese Relativbewegung zwischen dem Wagen 4 und der Brennstoffquelle 7 kann durch ein in sich flexible Versorgungsleitung 8 und/oder durch eine flexible Anbindung einer Versorgungsleitung an der wagenseitigen Brennereinheit 3 und/oder an der Brennstoffquelle 7 derart ermöglicht werden, dass eine Versorgung der Brennereinheit 3 mit Brennstoff aus der Brennstoffquelle 7 ununterbrochen gegeben ist. In diesem Zusammenhang kann es beispielsweise vorgesehen sein, dass die flexible Versorgungsleitung 8 aufgerollt ist und bei Einwirken einer Zugkraft auf die Versorgungsleitung 8 im Zuge eines Wegbewegens der Brennervorrichtung 9 von der Brennstoffquelle 7 ein automatisiertes Abrollen der flexiblen Versorgungsleitung 8 ausführbar ist. Alternativ oder zusätzlich kann ein Vorspannmittel (nicht dargestellt) vorgesehen sein, welches die flexible Versorgungsleitung 8 unter einer definierten Spannung hält und/oder im Falle einer Verringerung des Abstands zwischen der Brennstoffquelle 7 und der Brennervorrichtung 9 die flexible Versorgungsleitung 8 einrollt.

Der Wagen 4 kann wie beispielsweise in den Figuren dargestellt als Handwagen ausgebildet und manuell über die Landschaftsfläche 2 bewegbar sein bzw. werden. Hierzu kann der Wagen 4 eine Handhabe 11 bzw. wenigstens einen Griff zur manuellen Krafteinbringung durch eine Bedienperson (nicht dargestellt) aufweisen. Der der Wagen 4 kann beispielsweise - wie dargestellt - einachsig ausgebildet sein. Hierzu kann der Wagen beispielsweise zwei Räder 5 aufweisen, die koaxial zueinander ausgerichteten sind und um eine Drehachse 12 rotieren. Beispielsweise sind die Räder 5 an Achsstummeln 13, 13', welche eine Drehachse 12 bzw. eine Radachse bilden, drehbar gelagert.

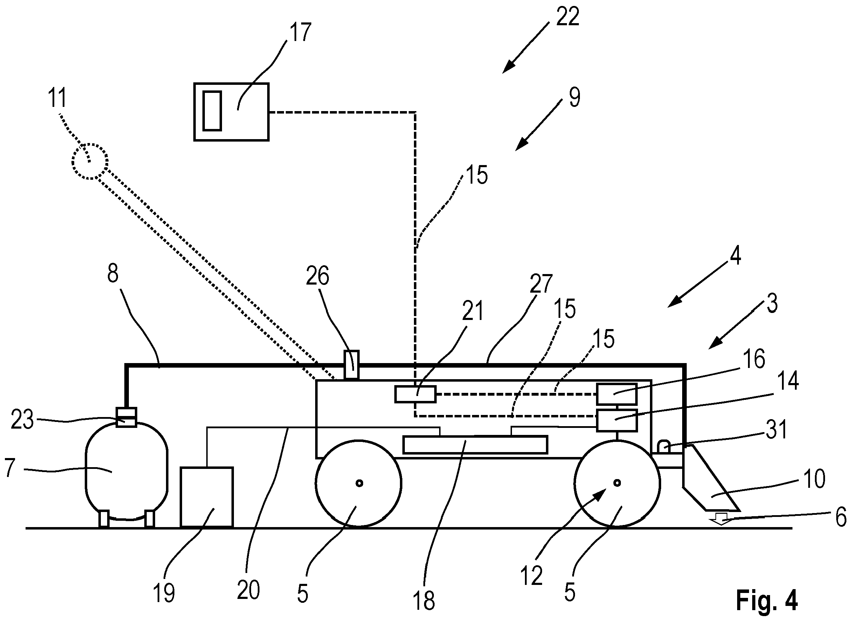

Der Wagen 4 kann beispielsweise mit einem Antrieb 14 zum Vortrieb des Wagens 4 ausgebildet bzw. ausgestattet sein. Bevorzugt erfolgt eine Steuerung des Antriebs 14 und/oder eine Lenkung des Wagens 4 vermittels einer kabellosen oder kabelgebundenen Steuersignalübertragung 15 zwischen (a) dem Antrieb 14 und/oder einer Lenkung 16 und (b) einer von dem Wagen 4 räumlich getrennt angeordneten Steuereinheit 17. Mit anderen Worten kann die Steuereinheit 17 räumlich getrennt bzw. beabstandet von dem Wagen 4 vorliegen, wobei über eine Steuersignalübertragung 15 bzw. eine Steuersignalverbindung Steuersignale der Steuereinheit 17 dem Antrieb 14 und/oder der Lenkung 16 übertragen werden können, vgl. Figur 4. Hierbei ist es möglich, dass eine Steuereinrichtung 22 neben der vom Wagen 4 räumlich getrennten Steuereinheit 17 auch ein wagenseitiges Steuerungselement 21 umfasst, das beispielsweise die wagenseitige Weiterverarbeitung und/oder Weiterleitung der steuereinheitsseitigen Steuerungssignale an den Antrieb 14 und/oder die Lenkung 16 ausführt. Die Steuereinrichtung 22 und/oder das Steuerungselement 21 und/oder die Steuereinheit 17 kann als Rechner bzw. als Computer, insbesondere als mobiles Endgerät, ausgebildet sein und optional Sende- und Empfangsmittel für eine kabellose Datenübertragung umfassen.

Die in Figur 4 in gepunkteten Linien dargestellte Handhabe 11 ist optional, d. h., dass der mit einem Antrieb 14 und einer Lenkung 16 versehene Wagen 4 optional ohne eine Handhabe 11 zur Einbringung von Muskelkraft einer Bedienperson für einen Vortrieb und/oder eine Lenkung des Wagens 4 ausgestattet sein kann. Es ist möglich, dass der Wagen 4 unabhängig davon, ob er eine Handhabe 11 zur Krafteinbringung für einen Vortrieb und/oder für eine Lenkung des Wagens 4 aufweist, zumindest in einer Betriebsphase autonom fahrbar sein kann.

Der in Figur 4 gezeigte Wagen 4 kann beispielsweise einen, insbesondere elektrischen, Energiespeicher 18 umfassen. Alternativ oder zusätzlich kann der Wagen 4 mit einer von dem Wagen 4 beabstandeten, insbesondere elektrischen, Energiequelle 19 über eine, insbesondere elektrische, Verbindungsleitung 20 verbunden sein. Es ist möglich, dass die Energiequelle 19 (z. B. ein mit Brennstoff betriebener Stromgenerator oder ein elektrischer Akkumulator) mit der Brennstoffquelle 7 zur Versorgung der Brennereinheit 3 eine Baugruppe ausbildet bzw. dass die Brennstoffquelle 7 und die elektrische Energiequelle 19 mittelbar oder unmittelbar miteinander befestigt sind und dabei eine, insbesondere steife, Einheit ausbilden. Alternativ oder zusätzlich kann es vorgesehen sein, dass die Versorgungsleitung 8 und die Verbindungsleitung 20 zumindest abschnittsweise, insbesondere über zumindest deren überwiegenden Länge, als Leitungsverbund bzw. als miteinander befestigte Leitungen ausgebildet sind. Optional kann eine ein Steuerungssignal übertragende Steuersignalübertragungsleitung 15 mit der Versorgungsleitung 8 und/oder mit der Verbindungsleitung 20 zumindest abschnittsweise, insbesondere über zumindest deren überwiegende Länge, als Leitungsverbund bzw. als miteinander befestigte Leitungen ausgebildet sein.

Der Antrieb 14 kann beispielsweise einen Elektromotor und/oder einen Verbrennungsmotor umfassen oder als solcher ausgebildet sein. Eine den Antrieb 14, insbesondere den Elektromotor und/oder den Verbrennungsmotor, mit Energie versorgende Energiequelle 19 kann beispielsweise über eine, insbesondere flexible, Verbindungsleitung 20 verbunden sein, wobei optional die Energiequelle 19 separat zu dem Wagen 4, insbesondere in einer Baugruppe mit der Brennstoffquelle 7, angeordnet oder ausgebildet sein kann.

Der Wagen 4 kann beispielsweise eine Handhabe 11 zur Einbringung einer Muskelkraft einer Bedienperson zum Antreiben und/oder zum Steuern des Wagens 4 umfassen, wobei der Antrieb 14 für den Vortrieb des Wagens 4 unterstützend für ein über die Handhabe 11 erfolgendes Antreiben und/oder Lenken des Wagens 4 durch die Bedienperson einwirkt. Bevorzugt ist die Leistung des Antriebs 14 und/oder der Betrieb der Lenkung 16 durch ein von der Bedienperson bedienbares Steuerelement der Steuereinrichtung 22 veränderbar bzw. steuerbar.

Die Steuereinrichtung 22, insbesondere das Steuerungsmittel 21, kann beispielsweise eingerichtet sein, zumindest teilweise, insbesondere vollständig, ein automatisiertes Fahren des fahrerlosen Wagens 4 auszuführen. Hierzu kann die Steuereinrichtung 22, insbesondere das Steuerungsmittel 21, wagenseitige Sensorsignale und/oder satellitengestützte Signale und/oder Navigationssignale, wie z. B. Ist- und Soll-Positionsdaten berücksichtigen. Es ist möglich, dass der Wagen 4 mit Sensoren, z. B. Abstandssensoren, ausgestattet ist.

Der Brennstoff kann beispielsweise zumindest abschnittsweise, insbesondere vollständig, in gasförmiger Form über bzw. durch die Versorgungsleitung 8 von der Brennstoffquelle 7 zu der Brennereinheit 3 transportiert bzw. übertragen werden. Insbesondere wird der Brennstoff beispielsweise in gasförmiger Form der Brennereinheit 3, insbesondere dem Brennermittel 10, zugeführt. Dies bedeutet, dass stromab der Brennstoffquelle 7 bzw. des Brennstofftanks kein Verdampfer zur Umwandlung eines flüssigen Brennstoffs in einen gasförmigen Brennstoff vorgesehen ist. Mit anderen Worten wird der Brennstoff in der Gasphase aus der Brennstoffquelle bzw. aus dem Brennstofftank entnommen. Hierzu kann die Versorgungsleitung 8 an den entsprechenden, für eine Entnahme des Brennstoffs aus der Gasphase vorgesehenen, Anschluss an der Brennstoffquelle 7 bzw. dem Brennstofftank angeschlossen werden.

Zwischen der Brennereinheit 3 und der Brennstoffquelle 7 und/oder in oder an der Brennstoffquelle 7 kann beispielsweise ein Druckminderungsmittel 23 angeordnet oder ausgebildet sein, das den Druck des Brennstoffs stromab der Brennstoffquelle 7 reduziert. Vorzugsweise ist das Druckminderungsmittel 23 unmittelbar an einem als Brennstoffquelle 7 ausgebildeten Brennstofftank angeordnet oder ausgebildet. Dabei kann es beispielsweise vorgesehen sein, dass in der Brennstoffquelle bzw. in dem Brennstofftank der Brennstoff in einem Druckbereich von 1,5 bis 20 bar, bevorzugt von 2 bis 16 bar, besonders bevorzugt von 2,5 bis 14 bar, höchst bevorzugt von 5 bis 12,5 bar, bevorratet wird, dabei kann der Brennstoff beispielsweise zumindest teilweise, insbesondere vollständig, in flüssiger Form vorliegen. Beispielsweise umfasst die Brennstoffquelle 7 bzw. der Brennstofftank ein Aufnahmevolumen im Bereich von 50 bis 1000 Liter, bevorzugt von 75 bis 750 Liter, besonders bevorzugt von 100 bis 400 Liter. Das zwischen dem Ausgang der Brennstoffquelle 7 und vor dem Brennermittel 10 angeordnete Druckminderungsmittel 23 kann beispielsweise den Druck des Brennstoffs auf einen Wert von 0,4 bis 12 bar, bevorzugt von 0,75 bis 8,0 bar, besonders bevorzugt von 0,90 bis 6,0 bar, reduzieren. Dieser Druckwertebereich kann in der Versorgungsleitung 8 und/oder in der Förderleitung 27 und/oder in dem Brennermittel 10 vorliegen.

Beispielsweise kann in dem Brennermittel 10 oder stromauf des Brennermittels 10 der diesem zugeführte Brennstoff mit Umgebungsluft vermischt werden, um ein Brennstoff-Luft-Gemisch zu bilden, welches in oder an dem Brennermittel 10 entzündet bzw. verbrannt wird zur Erzeugung der thermischen Energie 6 für die Pflege der Landschaftsfläche 2.

Die Brennereinheit 3 und insbesondere das Brennermittel 10 der Brennereinheit 3 kann beispielsweise derart eingerichtet sein, dass die von ihr ausgesendete und auf die Landschaftsfläche 2 einwirkende thermische Energie 6 zumindest teilweise, bevorzugt überwiegend, besonders bevorzugt gänzlich, auf die auf der Landschaftsfläche 2 oder deren Bestandteile vorherrschende Vegetation bzw. auf die dortigen Pflanzen einwirkt. Hierbei kann ein kurzzeitiger jedoch hochenergetischer Energieeintrag der thermischen Energie 6 erfolgen, der zu einer Zerstörung oder Schädigung von überirdischen, ggf. bestimmten Pflanzenteilen führt, jedoch das Wurzelwerk und ggf. unterhalb dieser Pflanzen und damit bodennahe Pflanzenstrukturen sowie bestimmte, sich ggf. zum Einsatzzeitpunkt dort befindliche Tierindividuen weniger intensiv schädigt oder gänzlich verschont. Mit anderen Worten kann mit der hierin beschriebenen Brenneranordnung 1 beispielsweise ermöglicht werden hochwachsende Pflanzenteile zurückzudrängen und gleichzeitig tieferliegende bzw. bodennahe oder unterirdische Pflanzenteile und bestimmte ggf. zum Einsatzzeitpunkt dort befindliche Tierindividuen zu verschonen oder in einem signifikant geringeren Maße zu schädigen.

Über ein, insbesondere manuell bedienbares, Einstellmittel 24, 25 kann beispielsweise die Menge des einem Brennermittel 10 der Brennereinheit 3 zugeführten Brennstoffs einstellbar sein. Bevorzugt ist das Einstellmittel 24, 25 im Nahbereich einer Handhabe 11 eines, insbesondere manuell zu bewegenden, Wagens 4 angeordnet. Damit kann wenigstens ein Einstellmittel 24, 25, insbesondere sämtliche Einstellmittel 24, 25, auf komfortable Weise von der Bedienperson, während diese wenigstens eine Hand an der Handhabe 11 hat, bedient werden.

Die wagenseitig angeordnete Brennereinheit 3 kann beispielsweise ein Anschlussmittel 26 zum Anschluss der Versorgungsleitung 8 umfassen, wobei die Versorgungsleitung 8 über das Anschlussmittel 26 und einer wagenseitige Förderleitung 27 mit einem Brennermittel 10 der Brennereinheit 3 verbunden ist, wobei zwischen dem Anschlussmittel 26 und dem Brennermittel 10 wenigstens zwei in Reihe angeschlossene Einstellmittel 24, 25 angeordnet sind. Über eine Bypassleitung 28 kann Brennstoff an wenigstens einem ersten Einstellmittel 24 vorbeiführt werden. Bevorzugt ist die Bypassleitung 28 derart eingerichtet, dass eine definierte Menge an Brennstoff an dem ersten Einstellmittel 24 vorbeigeführt wird, um eine Standflamme am Brennermittel 10 zu erzeugen und/oder aufrechtzuerhalten, für den Fall, dass das erste Einstellmittel 24 in einer Geschlossenstellung vorliegt. Mit anderen Worten dient das zweite Einstellmittel 25 als übergeordneter Ein- und Ausschalter für den Brennerbetrieb der Brennervorrichtung 9 wohingegen das erste Einstellmittel 24 zwischen einem Standbybetrieb und einem bestimmungsgemäßen Betrieb der Brennervorrichtung 9 schaltet bzw. steuert. Die Bypassleitung 28 bildet dabei vorzugsweise einen Teilabschnitt der wagenseitigen Förderleitung 27 zum Transport des Brennstoffs von dem Anschlussmittel 26 zum Brennermittel 10. Trotz der Bypassleitung 28 sind die Einstellmittel 24, 25 in Reihe geschaltet, da im Offenzustand der beiden Einstellmittel 24, 25 zumindest eine Teilmenge des Brennstoffs durch beide Einstellmittel 24, 25 bzw. an denen zugeordneten Kanalabschnitt hindurchströmt.

Die Brennereinheit 3 kann beispielsweise ein Zündmittel 29 zum Entzünden eines aus der Brennereinheit 3 austretenden Brennstoffs umfassen. Bevorzugt ist das Zündmittel 29 durch eine manuell zu bedienende Zündmittelbetätigung 30 aktivierbar, die im Nahbereich der Handhabe 11 des Wagens 4 angeordnet ist. Damit kann eine Bedienperson auf einfache und komfortable Weise ein Entzünden der Flamme in dem Brennermittel 10 initiieren.

Die Brennervorrichtung 9 kann beispielsweise mit einem Anschlagpunkt bzw. mit einer Schnittstelle für ein Zug- und/oder Hebemittel (nicht dargestellt) versehen sein, beispielsweise weist die Brennervorrichtung 9 eine Öse 31 auf, in welche ein Haken eines Zug- und/oder Hebemittels angehängt werden kann. Damit wird es ermöglicht, die Brennervorrichtung 9 vermittels des Zug- und/oder Hebemittels, insbesondere in unwegsamen und/oder hangartigen, Gelände zu ziehen oder abzulassen und damit eine durch das Zug- und/oder Hebemittel unterstützte bzw. gesicherte Bewegung der Brennervorrichtung 9 auszuführen. Der Anschlagpunkt und/oder die Schnittstelle, insbesondere die Öse 31, zur zumindest temporären Kopplung der Brennervorrichtung mit einem externen Zug- und/oder Hebemittel kann zweckmäßigerweise vor der, insbesondere einzigen, der wenigstens eine Rolle und/oder Rad 5 und/oder Kette zugeordneten Achse angeordnet oder ausgebildet sein. So ist es möglich, dass der Anschlagpunkt und/oder die Schnittstelle zur Verbindung der Brennervorrichtung 1 mit einem externen Zug- und/oder Hebemittel, insbesondere eine hierzu vorgesehene Öse 31, in bestimmungsgemäßer Bewegungsrichtung (Vorwärtsfahrrichtung) des Wagens 4, vor oder an einer Hinterachse des Wagens 4 und/oder vor oder an einer Vorderachse des Wagens 4 angeordnet oder ausgebildet ist.

Es ist möglich, dass ein Anschlagpunkt bzw. die Schnittstelle zur zumindest temporären Verbindung der Brennervorrichtung 1 mit einem externen Zug- und/oder Hebemittel, insbesondere hierzu vorgehaltene Öse 31, sich in Richtung der bestimmungsgemäßen Bewegungsrichtung des Wagens 4 vor dem Brennermittel 10 angeordnet oder ausgebildet ist.

Durch die entsprechend weit vorne liegende Anordnung des Anschlagpunkts bzw. der Schnittstelle zur zumindest temporären Verbindung der Brennervorrichtung 1 mit einem externen Zug- und/oder Hebemittel, insbesondere der hierzu vorgehaltenen Öse 31, kann sich im Betrieb des Wagens an einem Hang eine vorteilhafte Gewichts- und/oder Zugkrafteinwirkung ergeben und sich folglich eine vereinfachte und/oder gut manövrierbare Wagenführung oder Wagenbewegung ergeben.

Der Anschlagpunkt bzw. die Schnittstelle zur zumindest temporären Verbindung der Brennervorrichtung 1 mit einem externen Zug- und/oder Hebemittel, insbesondere die hierzu vorgehaltene Öse 31, sowie die übrige konstruktiv technische Ausgestaltung des Wagens 4 kann insgesamt und/oder im Hinblick auf den Anschlagpunkt derart beschaffen sein, dass durch eine Krafteinleitung, insbesondere eine Zugkrafteinleitung, an diesem Anschlagpunkt sich eine, insbesondere kontrollierbare, Bewegung aufgrund der eingebrachten Kraft, insbesondere Zugkraft, ergibt. Dabei kann beispielsweise das Gesamtgewicht des Wagens 4 zusätzlich zu einer für die Fortbewegung des Wagens, insbesondere in Hangabschnitten und/oder in einem unwegsamen Gelände, erforderliche Vorschubkraftkomponente vermittels des Anschlagpunkts und des hieran verbundenen Zug- und/oder Hebemittels eingebracht werden, ohne dass es hierbei zu einer Zerstörung (z. B. Bruch) und/oder Verformung und/oder einer sonstigen Beeinträchtigung des Wagens 4 und/oder der Brenneranordnung 1 kommt. Ebenso kann sich eine vergleichbare konstruktiv technische Ausgestaltung des Wagens 4 und/oder der Brenneranordnung 1 ergeben, sofern ein Hebe- und/oder Zugmittel am Wagen 4 selbst verbaut ist und über eine Verbindung dieser mit einem vom Wagen 4 externen Ankerpunkt (nicht dargestellt) sich durch Kraftaufbringung zwischen dem Hebe- und/oder Zugmittel und dem Ankerpunkt eine, insbesondere gezielte, Bewegung bzw. Fortbewegung des Wagens 4 ergibt. Als vom Wagen 4 externer Ankerpunkt kann beispielsweise ein Baum auf der Landschaftsfläche und/oder ein an der Brennstoffquelle 7 angeordnetes oder ausgebildetes Fixiermittel (nicht dargestellt), z. B. eine Halteöse (nicht dargestellt), dienen.

Der Anschlagpunkt bzw. die Schnittstelle zur zumindest temporären Verbindung der Brennervorrichtung 1 mit einem externen Zug- und/oder Hebemittel, insbesondere die hierzu vorgehaltene Öse 31, kann bezüglich einer Hochachse des Wagens 4 bzw. bezüglich einer senkrecht zur Aufstellfläche des Wagens 4 in einer auf Höhe oder oberhalb oder unterhalb einer (Rollen-, Rad 5,- Ketten-)Achse, insbesondere einer Vorder- und/oder Hinterachse, des Wagens 4 angeordnet oder ausgebildet sein.

Neben der Brenneranordnung 1 umfasst die Erfindung eine Brennervorrichtung 9 umfassend einen Wagen 4 und eine auf dem Wagen 4 befestigte oder befestigbare Brennereinheit 3 gemäß der hierin beschriebenen Brenneranordnung 1. Die Brennervorrichtung 9 umfasst insbesondere eine Schnittstelle bzw. ein Anschlussmittel 26 zur Verbindung mit einer, insbesondere flexiblen, Verbindungsleitung 8.

Auch umfasst die Erfindung ein Verfahren zur Pflege einer Landschaftsfläche 2 unter Verwendung einer hierin beschriebenen Brenneranordnung 1 und/oder Brennervorrichtung 9, wobei die Landschaftsfläche 2 von dem die Brennereinheit 3 aufweisenden Wagen 4 überfahren wird und dabei die Landschaftsfläche 2 mit thermischer Energie 6 durch Verbrennung eines, insbesondere gasförmigen, Brennstoffs in der Brennereinheit 3 beaufschlagt wird.

### BEZUGSZEICHENLISTE

- 1: Brenneranordnung
- 2: Landschaftsfläche
- 3: Brennereinheit
- 4: Wagen
- 5: Rad
- 6: thermische Energie
- 7: Brennstoffquelle
- 8: Versorgungsleitung
- 9: Brennervorrichtung
- 10: Brennermittel von 3
- 11: Handhabe
- 12: Drehachse
- 13, 13': Achsstummel
- 14: Antrieb von 4
- 15: Steuersignalübertragung
- 16: Lenkung
- 17: Steuereinheit
- 18: elektrischer Energiespeicher
- 19: elektrische Energiequelle
- 20: Verbindungsleitung
- 21: Steuerelement
- 22: Steuereinrichtung
- 23: Druckminderungsmittel
- 24: erstes Einstellmittel
- 25: zweites Einstellmittel
- 26: Anschlussmittel
- 27, 27': Förderleitung von 4
- 28: Bypassleitung
- 29: Zündmittel
- 30: Zündmittelbetätigung
- 31: Öse

## Patentansprüche

1. Brenneranordnung (1) zur Pflege von Landschaftsflächen, umfassend
- einen mit einer Brennereinheit (3) versehenen Wagen (4), wobei der Wagen (4) über wenigstens eine Rolle und/oder ein Rad (5) und/oder eine Kette auf der Landschaftsfläche (2) rollbar und/oder verfahrbar ist, wobei die Brennereinheit (3) zur Erzeugung von thermischer Energie (6) ausgehend von der Brennereinheit (3) zugeführtem Brennstoff eingerichtet ist,
- eine örtlich von dem Wagen (4) getrennt angeordnete Brennstoffquelle (7), wobei
- die Brennereinheit (3) während deren bestimmungsgemäßen Gebrauchs über eine Versorgungsleitung (8) mit der Brennstoffquelle (7) zur Versorgung der Brennereinheit (3) mit Brennstoff verbunden ist.

2. Brenneranordnung (1) nach Anspruch 1, **dadurch gekennzeichnet, dass** die Versorgungsleitung (8) zur brennstoffübertragenden Verbindung von Brennereinheit (3) und Brennstoffquelle (7) flexibel und/oder biegeschlaff ausgebildet und/oder über eine flexible Schnittstelle mit der Brennereinheit (3) und/oder mit der Brennstoffquelle (7) verbunden ist.

3. Brenneranordnung (1) nach Anspruch 1 oder 2, **dadurch gekennzeichnet, dass** der Wagen (4) als Handwagen ausgebildet ist und manuell über die Landschaftsfläche (2) bewegbar ist, insbesondere weist der Wagen (4) eine Handhabe (11) zur manuellen Krafteinbringung durch eine Bedienperson auf.

4. Brenneranordnung (1) nach einem der vorhergehenden Ansprüche, **dadurch gekennzeichnet, dass** der Wagen (4) einachsig ausgebildet ist, bevorzugt sind zwei Räder (5) an zwei koaxial ausgerichteten und eine Drehachse (12) bildenden Achsstummeln (13, 13') drehbar gelagert.

5. Brenneranordnung (1) nach einem der vorhergehenden Ansprüche, **dadurch gekennzeichnet, dass** der Wagen (4) mit einem Antrieb (14) zum Vortrieb des Wagens (4) ausgebildet ist, bevorzugt erfolgt eine Steuerung des Antriebs (14) und/oder einer Lenkung (16) des Wagens (4) vermittels einer kabellosen oder kabelgebundenen Steuersignalübertragung (15) zwischen dem Antrieb (14) und/oder der Lenkung (16) und einem von dem Wagen (4) räumlich getrennt angeordneten Steuereinheit (17) einer Steuereinrichtung (22).

6. Brenneranordnung (1) nach Anspruch 5, **dadurch gekennzeichnet, dass** der Wagen (4) eine Handhabe (11) zur Einbringung einer von einer Bedienperson ausgehenden Kraft zum Antreiben und/oder zum Steuern des Wagens (4) umfasst, wobei der Antrieb (14) für den Vortrieb des Wagens (4) unterstützend für das Antreiben und/oder Lenken durch die Bedienperson einwirkt, bevorzugt ist die Leistung des Antriebs (14) durch ein von der Bedienperson bedienbares Steuerelement (21) der Steuereinrichtung (22) veränderbar.

7. Brenneranordnung (1) nach Anspruch 5 oder 6, **dadurch gekennzeichnet, dass** die Steuereinrichtung (22) eingerichtet ist, zumindest teilweise, insbesondere vollständig, ein automatisiertes Fahren des Wagens (4) auszuführen.

8. Brenneranordnung (1) nach einem der vorhergehenden Ansprüche, **dadurch gekennzeichnet, dass** der Brennstoff zumindest abschnittsweise, insbesondere vollständig, in gasförmiger Form über die Versorgungsleitung (8) von der Brennstoffquelle (7) zu der Brennereinheit (3) transportiert wird.

9. Brenneranordnung (1) nach Anspruch 8, **dadurch gekennzeichnet, dass** zwischen der Brennereinheit (3) und der Brennstoffquelle (7) und/oder in oder an der Brennstoffquelle (7) ein Druckminderungsmittel (23) angeordnet oder ausgebildet ist, das den Druck des Brennstoffs stromab der Brennstoffquelle (7) reduziert, vorzugsweise ist das Druckminderungsmittel (23) unmittelbar an einer als Brennstofftank ausgebildeten Brennstoffquelle (7) angeordnet oder ausgebildet.

10. Brenneranordnung (1) nach einem der vorhergehenden Ansprüche, **dadurch gekennzeichnet, dass** die Brenneranordnung (1) derart eingerichtet ist, dass die von ihr auf die Landschaftsfläche (2) oder deren Bestandteile einwirkende thermische Energie (6) zumindest teilweise, bevorzugt überwiegend, besonders bevorzugt gänzlich, auf die auf der Landschaftsfläche (2) vorherrschende Vegetation einwirkt und dabei eine Zerstörung beispielsweise von unterhalb einer Bodenoberfläche liegenden Teilen der Vegetation vermeidet oder mindert sowie ggf. bestimmte zum Einsatzzeitpunkt dort befindliche Tierindividuen schonen kann.

11. Brenneranordnung (1) nach einem der vorhergehenden Ansprüche, **dadurch gekennzeichnet, dass** über ein, insbesondere manuell bedienbares, Einstellmittel (24, 25) die Menge des einem Brennermittel (10) der Brennereinheit (3) zugeführten Brennstoffs einstellbar sein, bevorzugt ist das Einstellmittel (24, 25) im Nahbereich einer Handhabe (11) eines, insbesondere manuell, über die Handhabe zu bewegenden Wagens (4) angeordnet.

12. Brenneranordnung (1) nach Anspruch 11, **dadurch gekennzeichnet, dass** die wagenseitig angeordnete Brennereinheit (3) ein Anschlussmittel (26) zum Anschluss der Versorgungsleitung (8) umfasst, wobei die Versorgungsleitung (8) über ein Anschlussmittel (26) und eine wagenseitige Förderleitung (27) mit einem Brennermittel (10) der Brennereinheit (3) verbunden ist, wobei zwischen dem Anschlussmittel (26) und dem Brennermittel (10) wenigstens zwei in Reihe angeschlossene Einstellmittel (24, 25) angeordnet sind, wobei eine Bypassleitung (28) den Brennstoff an wenigstens einem ersten Einstellmittel (24) vorbeiführt, bevorzugt ist die Bypassleitung (28) derart eingerichtet, eine definierte Menge an Brennstoff an dem ersten Einstellmittel (24) vorbeigeführt wird, um eine Standflamme am Brennermittel (10) zu erzeugen und/oder aufrechtzuerhalten.

13. Brenneranordnung (1) nach einem der vorhergehenden Ansprüche, **dadurch gekennzeichnet, dass** die Brennereinheit (3) ein Zündmittel (29) zum Entzünden eines aus der Brennereinheit (3) austretenden Brennstoffs umfasst, bevorzugt ist das Zündmittel (29) durch eine manuell zu bedienende Zündmittelbetätigung (30) aktivierbar, die im Nahbereich der Handhabe (11) des Wagens (4) angeordnet ist.

14. Brennervorrichtung (9) umfassend einen Wagen (4) und eine auf dem Wagen (4) befestigte oder befestigbare Brennereinheit (3) gemäß der Brenneranordnung (1) nach einem der vorhergehenden Ansprüche.

15. Verfahren zur Pflege einer Landschaftsfläche (2) unter Verwendung einer Brenneranordnung (1) nach einem der Ansprüche 1 bis 13, wobei die Landschaftsfläche (2) von dem die Brennereinheit (3) aufweisenden Wagen (4) überfahren wird und dabei die Landschaftsfläche (2) mit thermischer Energie (6) durch Verbrennung des Brennstoffs in der Brennereinheit (3) beaufschlagt wird.
